# EUROPÄISCHE PATENTSCHRIFT

(11) **EP 3 108 970 B1**
(45) Veröffentlichungstag und Bekanntmachung des Hinweises auf die Patenterteilung: **23.01.2019**
(21) Anmeldenummer: 16172243.4
(22) Anmeldetag: 31.05.2016
(51) Int. Cl.: B05D 3/06, B05D 7/04, B32B 37/22, B32B 37/24

(54) **VERFAHREN ZUR HERSTELLUNG EINES LACKIERTEN, DEKORATIVEN LAMINATES**
METHOD FOR PRODUCING A VARNISHED, DECORATIVE LAMINATE
PROCÉDÉ DE FABRICATION D'UN STRATIFIÉ DÉCORATIF PEINT

(30) Priorität: 25.06.2015 DE 102015110276
(43) Veröffentlichungstag der Anmeldung: 28.12.2016
(73) Patentinhaber: Hymmen GmbH Maschinen- und Anlagenbau, 33613 Bielefeld (DE)
(72) Erfinder:
(74) Vertreter: Dantz, Jan Henning

(56) Entgegenhaltungen:
- EP-A1- 1 923 211
- EP-A2- 1 470 933
- WO-A1-2011/103641
- DE-A1-102006 053 662
- DE-U1-202005 015 978

## Beschreibung

Die vorliegende Erfindung betrifft ein Verfahren zur Lackierung eines dekorativen Laminates, welches aus einer oder mehreren Schichten eines Melamin- und/oder Phenol-imprägnierten Papiers besteht und mit einer flüssigen Beschichtung aus einem Acrylatlack lackiert wird.

Nach dem Stand der Technik ist eine Vielzahl von Methoden zur Herstellung von dekorativen Laminaten mit unterschiedlichen Oberflächen, wie strukturierter Oberfläche, matter Oberfläche, Hochglanzoberfläche oder semi-matter Oberfläche bekannt. Solche Melaminlaminate finden ihre Anwendung in der Beschichtung von zum Beispiel Türen, Küchenarbeitsplatten oder auch Möbelfronten. Mit "Laminat" oder "Melaminlaminat" wird hier ein aus mehreren harzimprägnierten Papierlagen (Melaminharz und Phenolharz) verpresstes, dekoratives Laminat mit einer Dicke von 0,1 mm - 1,5 mm gemeint.

Das Laminat hat üblicherweise eine dekorative Oberfläche, z.B. eine gedruckte Holzstruktur oder Steinstruktur. Bei der Herstellung der abschließenden Oberfläche wird typischerweise auf die Herstellung einer Prägematrix zurückgegriffen, z.B. ein verchromtes Prägeblech aus einer Takt- oder Mehretagenpresse oder ein verchromtes Prägeband (verchromtes Stahlband, 1 mm - 1,9 mm dick) aus einer Doppelbandpresse. Die entsprechend hergestellte texturierte Oberfläche, wie sie z.B. von Firmen wie Hindrichs-Auffermann, Niederlassung des Sandvik-Konzerns, oder der österreichischen Firma Berndorf Band AG hergestellt wird, beinflusst und erzeugt die entsprechende Oberfläche direkt in der abschließenden, ausgehärteten Melaminschicht.

Alternativ können auch Hochglanzoberflächen oder matte Oberflächen oder auch verschiedene Glanzgrade auf der verchromten Stahlbandfläche hergestellt werden. Nachteil dieses Standes der Technik ist es, dass ausschließlich der Glanzgrad und die Strukturierungsmöglichkeiten des Melamins verwendet werden können, welches beispielsweise bei der Erzeugung eines besonders hochwertigen Hochglanzes Qualitätsbegrenzungen hat. Zum Stand der Technik bezüglich eines Synchron-Strukturierens einer Melaminoberfläche vgl. z.B. DE 103 16 695 oder EP 888 215. Es sind verschiedene Verfahren zum Lackieren einer Melaminoberfläche bekannt, welche aber nicht auf Melaminlaminaten mit einer Dicke von 0,5 mm bis 1,2 mm durchgeführt werden können, sondern nur auf melaminbeschichteten Spanplatten mit einer Dicke von z.B. > 5 mm. Die DE 197 06 619 offenbart ein Verfahren zum Beschichten von Kunststoffplatten, bei dem ein durch ionisierende Strahlung härtender lack beschichtet wird, die noch nasse Lackoberfläche abgedeckt wird und dann ausgehärtet wird. Die Abdeckung wird dann entfernt, um die Kunststoffplatte mit der Beschichtung dann weiter zu verarbeiten.
Die DE 20 2005 015 978 U1 offenbart ein Verfahren zur Herstellung einer abriebfesten Platte mit dekorativer Oberfläche, bei der auf einen Decklack eine Stukturgeberfolie aufgeldt wird, die nach dem Aushärten wieder aufgewickelt wird.
Die EP 1 470 933 A2 offenbart ein Verfahren zur Herstellung von mit einer einen Lack enthaltenden Schutzschicht versehenen flächigen Materialien, auf denen der Lack zumindest teilweise ausgehärtet wird, um eine hohe Verschleißfestigkeit zu erhalten.
Somit stellt sich die Aufgabe, wie man eine qualitativ hochwertige, lackierte Oberfläche eines Melaminlaminates schaffen kann, insbesondere eine hochwertige Hochglanzoberfläche.
Das erfindungsgemäße Verfahren löst diese Aufgabenstellung mit den Merkmalen des Anspruches 1. Dabei wird eine Heizpresse, vorzugsweise eine Doppelbandpresse, die ein Laminat, vorzugsweise ein kontinuierlich hergestelltes Melaminlaminat, erzeugt und einer daran anschließenden Lackiervorrichtung eingesetzt, welche, vorzugsweise direkt nach der Heizpresse, eine erste flüssige Lackschicht, als Grundbeschichtung, aufträgt. Auf diese Grundbeschichtung können optional auch weitere Lackschichten aufgetragen werden. Anschließend wird auf diese flüssige Grundbeschichtung, vorzugsweise mit Hilfe eines Kalanders, eine transparente Folie aufgelegt bzw. aufkalandriert. Danach wird die flüssige Lackschicht durch die transparente Folie mit einer Strahlenquelle bestrahlt und dadurch ausgehärtet. Dies kann vorzugsweise dadurch erfolgen, dass der noch flüssige, UV-härtende Acrylatlack zwischen der oben liegenden transparenten Folie und der darunter liegenden dekorativen Melaminlaminatschicht durch UV-Strahlung oder Elektronenstrahlung ausgehärtet wird. Das fertige Laminat kann dabei aufwickelbar sein, also flexibel oder biegbar sein, um auf eine Rolle aufgewickelt zu werden. Das Laminat kann in einem weiteren Verfahrensschritt dann auf festen Materialien, wie Holzwerkstoffplatten, Zementfaser- oder Kunststoffplatten verklebt werden.

Nach dem optionalen Abziehen der transparenten Deckfolie ergibt sich eine hochqualitative Lackierung auf dem Laminat, welche bei Verwendung einer glatten Folie eine Hochglanzlackierung, alternativ bei Verwendung einer matten Folie eine mattierte Oberfläche oder eine Oberfläche mit Strukturen ergeben kann, welche sich durch die Folie in die Lackoberfläche geprägt haben. Strukturtiefen können zwischen 10 µm und 100 µm liegen.

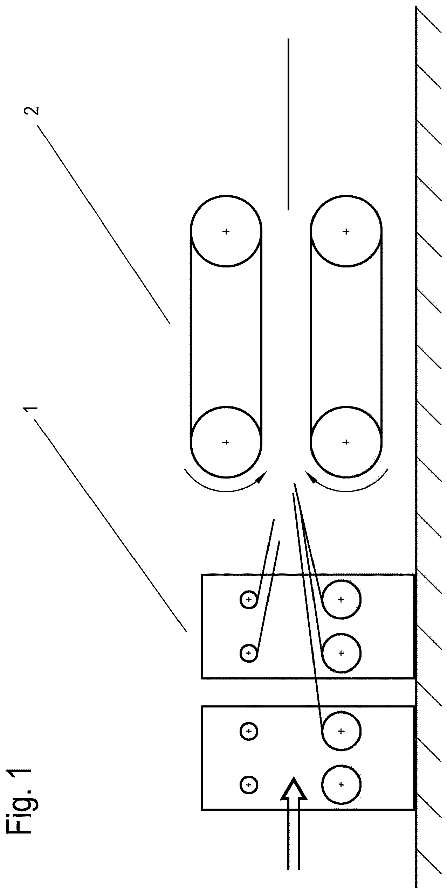

Bevorzugte Ausführungsvarianten des erfindungsgemäßen Verfahrens werden in den folgenden Figuren 1-3 beschrieben. Dabei zeigt die Zusammenschau aus Fig. 1-3 einen gesamten Überblick über das erfindungsgemäße Verfahren, wobei die Sektion A die Abwicklungen der verschiedenen harzimprägnierten Papierschichten und die Doppelbandpresse zur Herstellung des Laminates beinhaltet und in Figur 1 näher beschrieben wird, die Sektion B die weitere Bearbeitung des Laminates mit Kühlung, Anschleifen von der Rückseite, Aufwicklung bzw. Bogenschnitt und die Sektion C die Lackiervorrichtung zur Aufbringung der flüssigen Beschichtung und Aushärtung der flüssigen Beschichtung auf dem hergestellten Laminat zeigt. Das kontinuierlich hergestellte Laminat läuft ohne Unterbrechung durch die Sektionen A, B und C, im Wesentlichen mit kontinuierlicher Geschwindigkeit. In einer möglichen alternativen Ausführungsform kann zwischen den Sektionen B und C eine Tänzerstation vorgesehen sein, um mögliche Geschwindigkeitsdifferenzen zwischen der Presse und der Lackiereinheit aufzufangen.

Vorzugsweise wird das erfindungsgemäße Verfahren in folgenden Schritten ausgeführt: Zunächst wird ein dekoratives Laminat mit einer Stärke von 0,1 mm bis 1,5 mm in einer Heizpresse 2 hergestellt. Danach wird eine flüssige Lackschicht auf das ausgehärtete Laminat aufgebracht. Anschließend wird eine transparente Folie auf den noch flüssigen Lack gelegt. Die flüssige Lackschicht wird durch die transparente Folie mit einer Strahlenquelle 14 ausgehärtet.

Vorzugsweise wird nach dem Aushärten der flüssigen Lackschicht die transparente Folie direkt wieder abgezogen, und der dann ausgehärtete Lack verbleibt auf der Oberseite des dekoratives Laminates.

Vorzugsweise verbleibt die transparente Folie nach dem Aushärten der flüssigen Lackschicht auf dem Laminat.

Vorzugsweise ist die Folie mindestens von der den Lack berührenden Seite hochglänzend. Dieser Hochglanzspiegeleffekt überträgt sich durch die höchste Glattheit auf die darunter liegende, ausgehärtete Lackschicht.

Vorzugsweise hat die verwendete transparente Folie auf der dem Lack zugewandten Seite eine optisch matte Oberfläche, welche nach dem Aushärten durch die transparente Folie hindurch und dem anschließenden Abziehen als optisch matter Effekt auf dem Lack sichtbar wird.

Vorzugsweise beinhaltet die verwendete transparente Folie eine Struktur in der Oberfläche mit einer Strukturtiefe von 10 µm bis 100 µm, welche nach dem Aushärten der Lackschicht durch die transparente Folie sich in dem ausgehärteten Lack wiederfindet.

Vorzugsweise wird vor dem Auflegen der transparenten Folie der flüssige Lack in mehreren Schichten aufgebracht, wobei zwischen den zwei oder mehr Auftragsschichten eine teilweise oder vollständige Trocknung der darunter liegenden Lackschicht angeordnet sein kann.

Vorzugsweise ist der Lack ein Acrylatlack, welcher 3 % bis 20 % UV-Photoinitiatoren enthält und durch UV-Strahlung aushärtet.

Vorzugsweise ist der Lack ein Acrylatlack ohne Zugabe von Photoinitiatoren und die Aushärtung des flüssigen Lackes geschieht durch Elektronenstrahlhärtung.

Vorzugsweise wird nach dem Aushärten der flüssigen Lackschicht durch die transparente Folie und dem anschließenden Abziehen der transparenten Folie eine oder mehrere weitere Lackschichten auf den bereits ausgehärteten Lack aufgebracht und getrocknet.
Vorzugsweise hat die transparente Folie eine Dicke von 10 µm bis 200 µm, bevorzugt 30 µm - 120 µm.
Vorzugsweise ist die Folie nicht oder nur teilweise transparent. Vorzugsweise ist der aufgebrachte, flüssige Lack pigmentiert und damit nicht oder nur teilweise transparent.

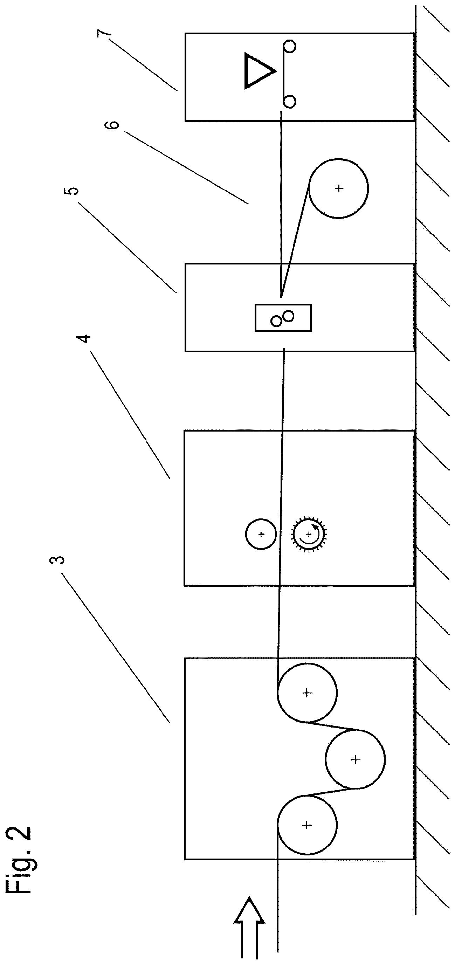

Die Figur 1 stellt einen Abwicklungsbereich 1 für die einzelnen Schichten des Laminates dar sowie die kontinuierliche Doppelbandpresse 2 als Heizpresse, in der das Laminat hergestellt wird. In alternativen Ausführungsformen könnte diese Doppelbandpresse auch durch eine Ein- oder Mehretagentaktpresse ersetzt werden. In Figur 2 ist die weitere Bearbeitung des bahnförmigen Laminates nach der kontinuierlichen Doppelbandpresse und vor dem Lackieren dargestellt. Es zeigt eine Kühleinrichtung 3 zum Rückkühlen des Laminates mit gekühlten Walzen, anschließend den kontinuierlichen Ablauf in eine Schleifmaschine 4, die das Laminat kontinuierlich von unten anschleift, danach folgend eine Kantenbesäumstation 5, bei der die Ränder des Laminates rechts und links besäumt werden. Darauf folgend ist eine Aufwickelstation 6 dargestellt für den Fall, dass das Laminat ohne Lackierung bleiben soll sowie eine Schnittstation 7, um Bogenware zu schneiden. Die Stationen 3 - 7 können für das erfindungsgemäße Verfahren auch entfallen, so dass in einer alternativen Ausführungsform auch das Laminat direkt aus der Presse in die erste Lackiereinheit 9 gefahren werden kann.

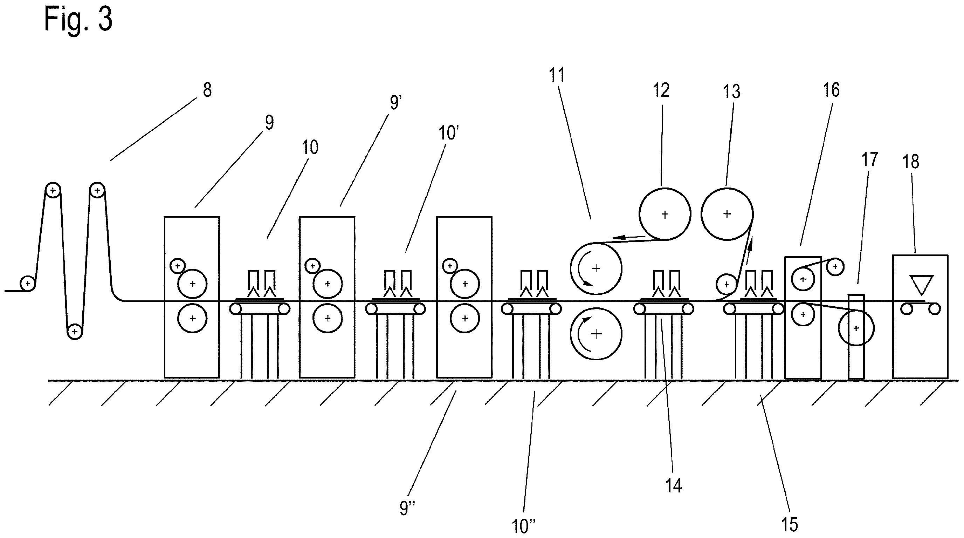

Figur 3 zeigt für eine mögliche Entkoppelung der Geschwindigkeiten der verschiedenen Sektionen eine Tänzerstation 8. Daran folgend ist die erste Kombination aus Lackauftrag 9 und Trocknung 10 angeordnet. In dieser Trocknungseinrichtung, die mit einer Strahlenquelle UV oder Elektronenstrahlung ausgestattet sein kann, alternativ aber auch durch IR- oder Umlufttrocknung bei wässrigen oder lösungsmittelbasierten Lacksystemen möglich ist, kann der Lack vollständig oder nur teilweise angetrocknet werden. Weitere Kombinationen aus Lackauftrag und Trocknung 9', 10' sowie 9" und 10" können in alternativen Ausführungsformen danach geschaltet werden. Anschließend läuft das mit der flüssigen Lackschicht beschichtete Laminat in einen Kalander 11, wo es mit einer transparenten Folie von einer Abwicklung 12, die um den Kalander 11 herumläuft und auf die flüssige Lackschicht des Laminates aufgebracht wird, versehen wird.

Anschließend durchläuft der so gewählte Aufbau aus Laminat, flüssiger Lackschicht und darauf liegender Folie unter einer Strahlenquelle 14 hindurch, welche mit UV-Strahlung durch die Folie hindurch den Lack aushärtet. In alternativen Ausführungsformen kann dies auch mit Hilfe einer Elektronenstrahlhärtung passieren.

Anschließend wird die Folie wieder abgezogen und auf der Aufwicklung 13 aufgewickelt. In alternativen Ausführungsformen kann die Folie auch auf dem Laminat verbleiben, z.B. als Transportschutz.

Der nachfolgende Tisch 15 ist mit einer weiteren Strahlenquelle versehen, um - je nach Lackzusammensetzung und Lackstärke - eine vollständige Aushärtung des Lackes zu ermöglichen. In einer alternativen Ausführungsform kann eine Schutzfolienkaschierung 16 vorgesehen sein, bei der auf die dann ausgehärtete Lackschicht eine Schutzfolie aufgeklebt wird als Transportschutz. Das so fertig lackierte Laminat wird dann in einer Aufwickelstation 17 aufgewickelt. Alternativ kann es auch gerade weiter zur Schnittstation 18 transportiert werden und in Bögen geschnitten werden.

Ausführungsbeispiel 1: Von den Abwicklungen 1 wird als unterste Lage ein Trockenpapier mit einem Papiergewicht von 100 g/m² abgewickelt. Darüber werden 3 Lagen eines Phenolharz-imprägnierten Papiers mit einem trockenen Papiergewicht von 160 g/m² und einem Gesamtgewicht inklusive imprägnierten Phenolharz von 290 g/m² abgewickelt. Auf diese drei Lagen kommt als Dekorlage ein mit Melaminharz imprägniertes, vorher bedrucktes Dekorpapier mit einem Trockengewicht von 70 g/m² und einem Gesamtgewicht von 120 g/m² nach dem Imprägnieren mit Melaminharz. Das Papier ist im Tiefdruckverfahren mit einer wässrigen Druckfarbe bedruckt. In einer alternativen Ausführungsform kann es auch digital bedruckt werden. Als oberste Lage kommt ein Overlay-Papier mit einem Trockengewicht von 22 g/m² und einem mit Melaminharz imprägnierten Gesamtgewicht von 95 g/m². Diese sechs Schichten werden in der kontinuierlichen Doppelbandpresse 2 unter einem Druck von 50 bar und einer Temperatur von 185 °C mit einer Produktionsgeschwindigkeit von 10 m/min. zu einem dekorativen Laminat verpresst. In einer alternativen Ausführungsform kann hier auch eine Taktpresse als Einetagenpresse oder Mehretagenpresse zum Einsatz kommen.

Das so hergestellte Laminat mit einer Gesamtschichtstärke von ca. 0,7 mm bis 0,8 mm wird über die Kühlstation 3 gefahren, um die Oberflächentemperatur auf ca. 50 °C bis 60 °C zu reduzieren. In der dann folgenden Schleifmaschine 4 wird das Laminat von unten angeschliffen. Dabei wird die Schichtdicke um ca. 0,2 mm reduziert. In der folgenden Besäumstation 5 wird das Laminat rechts und links um ca. 5 mm besäumt. Anschließend läuft das Laminat in die erste Beschichtungsanlage 9, bei der ein Acrylatlack über einen Walzenauftrag mit einer Schichtdicke von 40 µm auf die Oberfläche des Laminates gewalzt wird. In einer alternativen Ausführungsform kann vor der Beschichtungsanlage 9 auch noch eine Tänzerung zur Entkopplung von Geschwindigkeitsunterschieden der Presse und der Beschichtungsstation vorgesehen sein. Der Acrylatlack ist in diesem Ausführungsbeispiel eine Formulierung mit 30 Gew.% eines bi-Acrylates HDDA, 40 Gew.% eines bi-Acrylates DPGDA, 10 Gew.% eines Quervernetzers TM PTA, 3 Gew.% eines industrieüblichen Photoinitiators sowie 17 Gew,% sonstiger Bestandteile. Der Acrylatlack hat eine Viskosität von 80 - 500 mPa s, bevorzug 150 - 400 mPa s, gemessen bei 25°C und Normaldruck mit einem Rheometer (z.B. dem Modell Kinexus der Fa. Malvern).

Das so beschichtete Laminat läuft dann in den Kalander 11, wo es mit einer 40 µm dicken, transparenten Hochglanzfolie von der Abwicklung 12 belegt wird und anschließend in einer UV-Station mit einer Leistung von 150 W/cm ausgehärtet wird. Im folgenden Ablauf wird die transparente Folie abgezogen und auf die Aufwicklung 13 aufgewickelt. Das so hergestellte Laminat wird mit zwei weiteren UV-Strahlungsquellen 15 mit 150 W/cm vollständig ausgehärtet und anschließend in der Schnittstation 18 in Bogenware geschnitten.

Ausführungsbeispiel 2: Zur Herstellung eines Hochglanzdünnlaminates wird ein Trockenpapier sowie ein imprägniertes Dekorpapier mit trocken 70 g/m², nass mit Melaminharz imprägniert 120 g/m² und ein Overlay mit trocken 25 g/m² und imprägniert 105 g/m² abgewickelt. Dieser Aufbau wird in der kontinuierlichen Doppelbandpresse 2 mit einer Geschwindigkeit von 25 m/min. bei einem Pressdruck von 20 bar und einer Temperatur von 180 °C verpresst. Das Dekorpapier ist in diesem Fall einfarbig, z.B. tiefrot, eingefärbt. Das so hergestellte Laminat durchläuft nach der Tänzerstation 8 zwei Lackierstationen 9 und 9' mit nachfolgender Trocknung 10 und 10'. In diesen beiden Lackierstationen 9 und 9' mit anschließender Trocknung 10 und 10' wird ein leicht rot pigmentierter Acrylatlack aufgetragen und angehärtet. Anschließend wird in der dritten Auftragsstation 9" und 10" ein transparenter Acrylatlack auf den vorher aufgebrachten Lack aufgewalzt. Danach wird eine matte Folie von der Abwicklung 12 auf den noch nassen Lack aufgebracht und in der Trocknungsstation 14 durch Elektronenstrahlhärtung ausgehärtet. Aufgrund der hohen Intensität und der hohen Eindringtiefe der Elektronenstrahlhärtung ist eine nachfolgende Trocknung nicht nötig, so dass das so fertige Dünnlaminat in einer Aufwickelstation 17 mit der darauf verbliebenen matten Folie aufgewickelt werden kann. Bei der Verwendung beim Endnutzers wird die darauf verbliebene matte Folie dann wieder abgezogen und entfernt.

### Bezugszeichen

1 Abwicklungsstation von imprägniertem Papier
2 kontinuierliche Doppelbandpresse
3 Kühlstation für Laminat
4 Rückseitenschleifmaschine
5 Besäumstation
6 Laminataufwicklung
7 Laminatschnittstation
8 Tänzerstation
9, 9', 9" Lackauftragsvorrichtung
10, 10', 10" Tisch mit Trocknungseinheit
11 Kalander
12 Folienabwicklung
13 Folienaufwicklung
14 Strahlenquelle zur Trocknung
15 Strahlenquelle zur Endtrocknung
16 Schutzfolienkaschierung
17 Aufwicklung für fertiges, lackiertes Laminat
18 Schnittstation für fertiges Laminat

## Patentansprüche

1. Verfahren zur Erzeugung eines lackierten, dekorativen Laminates mit folgenden Schritten:
(A) Herstellung eines dekorativen Laminates aus mehreren harzimprägnierten Papierlagen:
(B) Aufbringen einer flüssigen Lackschicht auf das ausgehärtete Laminat;
(C) Auflegen einer transparenten Folie auf den noch flüssigen Lack;
(D) Aushärten der flüssigen Lackschicht durch die transparente Folie mit einer Strahlenquelle (14),
**dadurch gekennzeichnet, dass**
das dekorative Laminat aus mehreren harzimprägnierten Papierlagen mit einer Stärke von 0,1 mm bis 1,5 mm mit einer Heizpresse (2) hergestellt wird, wobei das Laminat aus den mehreren harzimprägnierten Papierlagen in einem kontinuierlichen Verfahren hergestellt und lackiert wird; und nach dem Aushärten ein
(E) Aufwickeln des fertig lackierten Laminats in einer Aufwickelstation (17) erfolgt.

2. Verfahren nach Anspruch 1, **dadurch gekennzeichnet, dass** nach dem Aushärten der flüssigen Lackschicht die transparente Folie direkt wieder abgezogen wird und der dann ausgehärtete Lack auf der Oberseite des dekoratives Laminates verbleibt.

3. Verfahren nach Anspruch 1, **dadurch gekennzeichnet, dass** die transparente Folie nach dem Aushärten der flüssigen Lackschicht auf dem Laminat verbleibt.

4. Verfahren nach einem der oben genannten Ansprüche, **dadurch gekennzeichnet, dass** die Folie mindestens von der den Lack berührenden Seite hochglänzend ist und sich dieser Hochglanzspiegeleffekt durch die höchste Glattheit auf die darunter liegende, ausgehärtete Lackschicht überträgt.

5. Verfahren nach Anspruch 2, **dadurch gekennzeichnet, dass** die verwendete transparente Folie auf der dem Lack zugewandten Seite eine optisch matte Oberfläche aufweist, welche sich nach dem Aushärten durch die transparente Folie hindurch und dem anschließenden Abziehen als optisch matter Effekt auf dem Lack sichtbar wird.

6. Verfahren nach einem der oben genannten Ansprüche 1, 2 oder 5, **dadurch gekennzeichnet, dass** die verwendete transparente Folie eine Struktur in der Oberfläche mit einer Strukturtiefe von 10 µm bis 100 µm beinhaltet, welche nach dem Aushärten der Lackschicht durch die transparente Folie sich in dem ausgehärteten Lack wiederfindet.

7. Verfahren nach einem der oben genannten Ansprüche, **dadurch gekennzeichnet, dass** vor dem Auflegen der transparenten Folie der flüssige Lack in mehreren Schichten aufgebracht wird, wobei bei zwei oder mehr Auftragsschichten eine teilweise oder vollständige Trocknung der darunter liegenden Lackschicht vorgenommen wird.

8. Verfahren nach einem der oben genannten Ansprüche, **dadurch gekennzeichnet, dass** der Lack ein Acrylatlack ist, welcher 3 Gew.% bis 20 Gew.% UV-Photoinitiatoren enthält und durch UV-Strahlung aushärtet.

9. Verfahren nach Anspruch 2, **dadurch gekennzeichnet, dass** nach dem Aushärten der flüssigen Lackschicht durch die transparente Folie und dem anschließenden Abziehen der transparenten Folie eine oder mehrere weitere Lackschichten auf den bereits ausgehärteten Lack aufgebracht und getrocknet werden.

10. Verfahren nach einem der oben genannten Ansprüche, **dadurch gekennzeichnet, dass** die transparente Folie eine Dicke von 10 µm bis 200 µm, bevorzugt 30 µm - 120 µm, hat.

11. Verfahren nach einem der oben genannten Ansprüche, **dadurch gekennzeichnet, dass** die Folie nicht oder nur teilweise transparent ist.

12. Verfahren nach einem der oben genannten Ansprüche, **dadurch gekennzeichnet, dass** der aufgebrachte, flüssige Lack pigmentiert ist und damit nicht oder nur teilweise transparent ist.

## Claims

1. Method of producing a coated decorative laminate by the following steps:
(A) producing a decorative laminate from a plurality of resin-impregnated paper layers;
(B) applying a liquid lacquer layer to the hardened laminate;
(C) laying a transparent film on the still-liquid lacquer;
(D) hardening the liquid lacquer layer through the transparent film by a radiation source (14),
**characterised in that**
the decorative laminate is produced from a plurality of resin-impregnated paper layers with a thickness of 0.1 to 1.5 millimetres by a heating press (2), wherein the laminate is produced from the plurality of resin-impregnated paper layers and coated in a continuous process; and after the hardening
(E) coiling of the finally coated laminate is carried out in a coiling station (17).

2. Method according to claim 1, **characterised in that** the transparent film is directly pulled off again after hardening of the liquid lacquer layer and the then-hardened lacquer remains on the upper side of the decorative laminate.

3. Method according to claim 1, **characterised in that** the transparent film remains on the laminate after hardening of the liquid lacquer layer.

4. Method according to any one of the preceding claims, **characterised in that** the film has a high gloss at least on the side contacting the lacquer and this high gloss mirror effect is transferred by the extremely high smoothness to the hardened lacquer layer lying thereunder.

5. Method according to claim 2, **characterised in that** the transparent film used has on the side facing the lacquer an optically matt surface which after the hardening through the transparent film and the subsequent pulling off is visible as an optically matt effect on the lacquer.

6. Method according to any one of the preceding claims 1, 2 and 5, **characterised in that** the transparent film used includes a structure in the surface with a structure depth of 10 microns to 100 microns which after hardening of the lacquer layer through the transparent film is again present in the hardened lacquer.

7. Method according to any one of the preceding claims, **characterised in that** prior to the laying of the transparent film the liquid lacquer is applied in several layers, wherein in the case of two or more coating layers a partial or complete drying of the lacquer layer disposed thereunder is carried out.

8. Method according to any one of the preceding claims, **characterised in that** the lacquer is an acrylic lacquer which contains 3 weight % to 20 weight % ultraviolet-light photo initiators and hardens through ultraviolet-light radiation.

9. Method according to claim 2, **characterised in that** after hardening of the liquid lacquer layer through the transparent film and the subsequent pulling-off of the transparent film one or more further lacquer layers are applied to the already hardened lacquer and dried.

10. Method according to any one of the preceding claims, **characterised in that** the transparent film has a thickness of 10 microns to 200 microns, preferably 30 microns to 120 microns.

11. Method according to any one of the preceding claims, **characterised in that** the film is non-transparent or only partly transparent.

12. Method according to any one of the preceding claims, **characterised in that** the applied liquid lacquer is pigmented and thus is non-transparent or only partly transparent.

## Revendications

1. Procédé d'obtention d'un stratifié décoratif verni comprenant les étapes suivantes consistant à :
(A) fabriquer un stratifié décoratif à partir de plusieurs couches de papier imprégné de résine,
(B) appliquer une couche de vernis fluide sur le stratifié durci,
(C) étendre un film transparent sur le vernis encore fluide,
(D) durcir la couche de vernis fluide au travers de la feuille transparente avec une source de rayonnement (14),
**caractérisé en ce que**
le stratifié décoratif constitué de plusieurs couches de papier imprégné de résine est obtenu avec une épaisseur de 0,1 mm à 1,5 mm au moyen d'une presse chauffante (2), le stratifié constitué de plusieurs couches de papier imprégné de résine étant fabriqué et verni par la mise en oeuvre d'un procédé continu, et, après le durcissement :
(E) le stratifié verni fini étant enroulé dans un poste d'enroulement (17).

2. Procédé conforme à la revendication 1,
**caractérisé en ce qu'**
après le durcissement de la couche de vernis fluide le film transparent est à nouveau directement enlevée et le vernis alors durci reste sur la face supérieure du stratifié décoratif.

3. Procédé conforme à la revendication 1,
**caractérisé en ce que**
le film transparent reste sur le stratifié après le durcissement de la couche de vernis fluide.

4. Procédé conforme à l'une des revendications précédentes,
**caractérisé en ce que**
le film est très brillant au moins par sa face voisine du vernis, et cet effet miroir de forte brillance se transmet du fait du caractère très lisse sur la couche de vernis durcie située au-dessous.

5. Procédé conforme à la revendication 2,
**caractérisé en ce que**
le film transparent utilisé a sa face tournée vers le vernis, une surface optiquement mate qui, devient visible sur le vernis après le durcissement au travers de ce film transparent et après avoir enlevé celui-ci, en tant qu'effet optiquement mat.

6. Procédé conforme à l'une des revendications 1, 2 et 5,
**caractérisé en ce que**
le film transparent utilisé comporte, sur sa surface supérieure, une structure ayant une profondeur de structure de 10 µm à 100 µm, qui, après le durcissement de la couche de vernis au travers de ce film transparent se trouve dans le vernis durci.

7. Procédé conforme à l'une des revendications précédentes,
**caractérisé en ce qu'**
avant d'avoir étendu le film transparent, le vernis fluide est appliqué selon plusieurs couches, et, dans le cas de l'application de deux ou d'un plus grand nombre de couches, un séchage partiel ou total de la couche de laque située en-dessous est effectué.

8. Procédé conforme à l'une des revendications précédentes,
**caractérisé en ce que**
le vernis est un vernis acrylique qui renferme 3 à 20% en poids de photo-initiateur à UV et durcit sous l'action d'un rayonnement UV.

9. Procédé conforme à la revendication 2,
**caractérisé en ce qu'**
après le durcissement de la couche de vernis fluide au travers du film transparent et l'enlèvement ultérieur de ce film transparent au moins une autre couche de vernis est appliquée et séchée sur le vernis préalablement durci.

10. Procédé conforme à l'une des revendications précédentes,
**caractérisé en ce que**
le film transparent a une épaisseur de 10 à 200 µm, de préférence de 30 à 120 µm.

11. Procédé conforme à l'une des revendications précédentes,
**caractérisé en ce que**
le film n'est pas ou n'est que partiellement transparent.

12. Procédé conforme à l'une des revendications précédentes,
**caractérisé en ce que**
le vernis fluide appliqué est pigmenté et n'est ainsi pas ou n'est que partiellement transparent.
